# EUROPEAN PATENT SPECIFICATION

(11) **EP 4 195 600 B1**
(45) Date of publication and mention of the grant of the patent: **06.05.2026**
(21) Application number: 21852647.3
(22) Date of filing: 04.08.2021
(51) Int. Cl.: H04L 25/02, H04L 5/00, H04W 74/00, H04W 74/08, H04W 8/24, H04W 74/0833

(54) **METHOD AND APPARATUS FOR REPORTING AI NETWORK MODEL SUPPORT CAPABILITY, METHOD AND APPARATUS FOR RECEIVING AI NETWORK MODEL SUPPORT CAPABILITY, AND STORAGE MEDIUM, USER EQUIPMENT AND BASE STATION**
VERFAHREN UND VORRICHTUNG ZUR MELDUNG VON KI-NETZWERKMODELLUNTERSTÜTZUNGSFÄHIGKEIT, VERFAHREN UND VORRICHTUNG ZUM EMPFANGEN VON KI-NETZWERKMODELLUNTERSTÜTZUNGSFÄHIGKEIT UND SPEICHERMEDIUM, BENUTZERGERÄT UND BASISSTATION
PROCÉDÉ ET APPAREIL POUR RAPPORTER UNE CAPACITÉ DE PRISE EN CHARGE DE MODÈLE DE RÉSEAU AI, PROCÉDÉ ET APPAREIL POUR RECEVOIR UNE CAPACITÉ DE PRISE EN CHARGE DE MODÈLE DE RÉSEAU AI, ET SUPPORT DE STOCKAGE, ÉQUIPEMENT UTILISATEUR ET STATION DE BASE

(30) Priority: 05.08.2020 CN 202010780069
(43) Date of publication of application: 14.06.2023
(73) Proprietor: Spreadtrum Semiconductor (Nanjing) Co., Ltd., Nanjing, Jiangsu 211899 (CN)
(72) Inventor: LEI, Zhenzhu, Shanghai 201203 (CN)
(74) Representative: Nordmeyer, Philipp Werner
(86) International application number: PCT/CN2021/110478
(87) International publication number: WO 2022/028450

(56) References cited:
- EP-A1- 3 726 863
- WO-A1-2019/134563
- WO-A1-2020/032773
- WO-A1-2021/126907
- CN-A- 109 151 870
- CN-A- 111 819 872
- CN-A- 111 954 206
- US-A1- 2021 160 149
- ERICSSON: "Higher-layer aspects for Redcap", vol. RAN WG1, no. e-Meeting; 20200525 - 20200605, 16 May 2020 (2020-05-16), XP052344600, Retrieved from the Internet <URL:https://ftp.3gpp.org/tsg_ran/WG1_RL1/TSGR1_101-e/Docs/R1-2003292.zip R1-2003292 Higher-layer aspects for Redcap.docx> [retrieved on 20200516]

## Description

### CROSS-REFERENCE TO RELATED APPLICATIONS

This application claims priority to Chinese Patent Application No. 202010780069.6 filed on August 5, 2020, and entitled "METHOD AND APPARATUS FOR REPORTING AI NETWORK MODEL SUPPORT CAPABILITY, METHOD AND APPARATUS FOR RECEIVING AI NETWORK MODEL SUPPORT CAPABILITY, STORAGE MEDIUM, USER EQUIPMENT AND BASE STATION".

### TECHNICAL FIELD

The present disclosure generally relates to communication technology field, and more particularly, to a method and apparatus for reporting Artificial Intelligence (AI) network model support capability, a method and apparatus for receiving AI network model support capability, a storage medium, a User Equipment (UE) and a base station.

### BACKGROUND

An AI algorithm may be applied in channel estimation, where a process of estimating all channel values from a pilot is equated to a traditional image restoration/denoising process, and a deep learning algorithm for image restoration/denoising is adopted to complete the channel estimation.

Currently, channel estimation based on AI network models is done at a UE. The UE can learn performance of each AI network model configured and a size of input and output.

WO 2019/134563 A1 discloses determining a location measurement capability supported by a terminal device. S301: A positioning service function entity sends a capability request of UE to the UE. S302: The UE feeds back the capability supported by the UE to the positioning service function entity, where the capability indicates that the UE supports channel estimation and/or channel impulse response-based measurement. The positioning service function entity establishes a model of a correspondence between the measurement data and the location of the UE, and the model may be trained once in advance or periodically.

WO 2020/032773 A1 discloses a method for performing channel estimation in wireless communication system and apparatus therefore.

Ericsson, "Higher-layer aspects for Redcap", 3rd Generation Partnership Project (3GPP) Draft R1-2003292, Online Meeting, June 2020 discloses higher-layer aspects for Redcap.

WO 2021/126907 A1 discloses a neural network configuration for wireless communication system assistance.

However, how a base station learns relevant parameters of the AI network models at the UE is an urgent technical problem to be solved.

### SUMMARY

The invention is set out in the appended set of claims.

Embodiments of the present disclosure enable a base station to learn relevant parameters of an AI network model at the UE.

A method for reporting AI network model support capability is provided, including: determining capability of supporting an AI network model, wherein the capability of supporting the AI network model includes whether to support using the AI network model for channel estimation; and reporting the capability of supporting the AI network model using an uplink resource in a random access procedure.

Said reporting the capability of supporting the AI network model using an uplink resource in a random access procedure includes: reporting the capability of supporting the AI network model using a time-frequency resource for transmitting a preamble.

Said reporting the capability of supporting the AI network model using a time-frequency resource for transmitting a preamble includes: determining subsets of Physical Random Access Channel Occasions (ROs) and types of the subsets, wherein the types of the subsets include being used for initiating random access by a UE that supports the AI network model and being used for initiating random access by a UE that does not support the AI network model; and determining a to-be-used subset of the ROs based on the capability of supporting the AI network model and the types of the subsets, and initiating random access using any RO in the to-be-used subset of the ROs.

Optionally, prior to determining the subsets of ROs and the types of the subsets, the method further includes: receiving the subsets of ROs and the types of the subsets which are configured by a base station.

Said reporting the capability of supporting the AI network model using a time-frequency resource for transmitting a preamble includes: determining subsets of preambles and types of the subsets, wherein the types of the subsets include being used for initiating random access by a UE that supports the AI network model and being used for initiating random access by a UE that does not support the AI network model; and determining a to-be-used subset of the preambles based on the capability of supporting the AI network model and the types of the subsets, and reporting the capability of supporting the AI network model using a preamble in the to-be-used subset of the preambles.

Optionally, following reporting the capability of supporting the AI network model using the uplink resource in the random access procedure, the method further includes: based on that the capability of supporting the AI network model indicates supporting using the AI network model for channel estimation, receiving an AI model size reporting trigger instruction from a base station, wherein the support capability reporting trigger instruction indicates to report an input size of all the AI network model; and reporting the input size of all the AI network model using a PDSCH scheduled by a PDCCH in response to the AI model size reporting trigger instruction.

A storage medium having computer instructions stored therein is provided, wherein when the computer instructions are executed, the method for reporting the AI network model support capability is performed.

A UE including a memory and a processor is provided, wherein the memory has computer instructions stored therein, and when the processor executes the computer instructions, the method for reporting the AI network model support capability is performed.

Embodiments of the present disclosure may provide following advantages.

In embodiments of the present disclosure, capability of supporting an AI network model is determined, wherein the capability of supporting the AI network model includes whether to support using the AI network model for channel estimation, and the capability of supporting the AI network model is reported using an uplink resource in a random access procedure. In the embodiments of the present disclosure, the UE is capable of reporting the capability of supporting the AI network model in the random access procedure, so that the base station can configure a demodulation reference signal for the UE based on the UE's capability of supporting the AI network model, thereby realizing optimal assignment of resources.

Further, subsets of ROs and types of the subsets are determined, wherein the types of the subsets include being used for initiating random access by a UE that supports the AI network model and being used for initiating random access by a UE that does not support the AI network model, a to-be-used subset of the ROs is determined based on the capability of supporting the AI network model and the types of the subsets, and random access is initiated using the to-be-used subset of the ROs. In the embodiments of the present disclosure, the UE can indirectly indicate its capability of supporting the AI network model via the type of the subset of ROs used for initiating random access, without occupying additional resources or signaling to report the capability, thereby saving resources and signaling overhead.

Further, message 3 is used to report the capability of supporting the AI network model. In the embodiments of the present disclosure, by reusing message 3, the capability of supporting the AI network model can be reported while a random access request is initiated, thereby saving resources and signaling overhead.

### BRIEF DESCRIPTION OF THE DRAWINGS

FIG. 1 is a flow chart of a method for reporting AI network model support capability according to an embodiment;
FIG. 2 is a diagram of an application scenario according to an embodiment;
FIG. 3 is a diagram of an application scenario according to an embodiment;
FIG. 4 is a flow chart of a method for receiving AI network model support capability according to an embodiment;
FIG. 5 is a structural diagram of an apparatus for reporting AI network model support capability according to an embodiment; and
FIG. 6 is a structural diagram of an apparatus for receiving AI network model support capability according to an embodiment.

### DETAILED DESCRIPTION

As described in the background, how a base station learns relevant parameters of an AI network model at a UE is an urgent technical problem to be solved.

Inventors found based on researches that if a UE supports AI-based channel estimation, a demand for demodulation reference signal density is relatively low. That is, compared with a UE using traditional channel estimation, a network side may configure a lower-density Demodulation Reference Signal (DMRS) for the UE that supports AI-based channel estimation.

A UE is capable of reporting capability of supporting an AI network model in a random access procedure, so that a base station can configure a demodulation reference signal for the UE based on the UE's capability of supporting the AI network model, thereby realizing optimal assignment of resources.

The UE can indirectly indicate its capability of supporting the AI network model via a type of a subset of ROs used for initiating random access, without occupying additional resources or signaling to report the capability, thereby saving resources and signaling overhead.

In order to clarify the objects, characteristics and advantages of the disclosure, embodiments of present disclosure will be described in detail in conjunction with accompanying drawings.

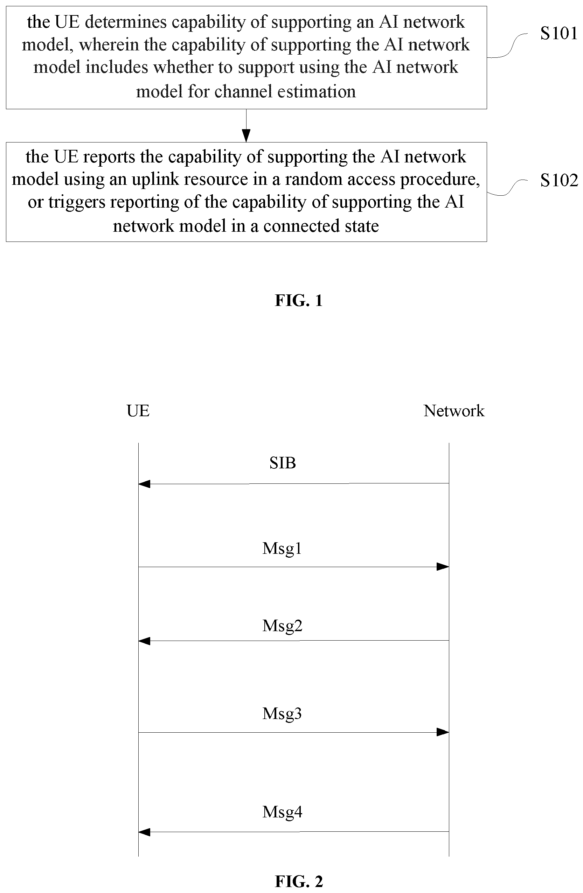

Referring to FIG. 1, FIG. 1 is a flow chart of a method for reporting AI network model support capability according to an embodiment.

The method as shown in FIG. 1 is applied to a UE and includes S101 and S102.

In S101, the UE determines capability of supporting an AI network model, wherein the capability of supporting the AI network model includes whether to support using the AI network model for channel estimation.

In S102, the UE reports the capability of supporting the AI network model using an uplink resource in a random access procedure.

It should be noted that sequence numbers of steps in the embodiment do not limit an execution order of the steps.

It could be understood that, in some embodiments, the method may be implemented by software programs running in a processor integrated in a chip or a chip module.

In some embodiments, the AI network model performs channel estimation according to an input channel estimation matrix, and may be any appropriate AI network model, such as a model obtained by training based on historical data. The AI network model may include one AI network model or a plurality of AI network models.

In S101, if the UE is configured with an AI network model, it means that the UE has the capability of supporting the AI network model, that is, the UE supports using the AI network model for channel estimation; or if the UE is not configured with an AI network model, it means that the UE does not have the capability of supporting the AI network model.

To enable the base station to know the UE's capability of supporting the AI network model in S102, the UE uses an uplink resource to report the capability of supporting the AI network model during the random access procedure. That is, the base station actively reports during the random access procedure.

The UE transmits messages to a network through the uplink resource configured by the base station during the random access procedure, such as message 1 (Msg1) or message 3 (Msg3). Then, the UE can reuse the uplink resource to report the capability of supporting the AI network model, so as to complete the reporting of the capability of the AI network model while completing the random access.

Referring to FIG. 2, in the random access procedure, the network transmits a System Information Block (SIB), and SIB1 indicates a resource for transmitting a preamble (Msg1). By reading the SIB 1, the UE determines the resource for transmitting the preamble to the network to indicate its intention to access the network. If the network receives Msg1 correctly, the network transmits a random access response message (Msg2) scrambled with a Random Radio Network Temporary Identity (RA-RNTI) to the UE. After transmitting Msg1, the UE may use RA-RNTI to monitor Msg2 from the network to descramble Msg2. Msg2 may include indication of a resource used for the UE transmitting Mgs3. Afterward, the UE transmits its identity and initial access establishment request (Msg3) to the network through uplink scheduling instruction in Msg2. Finally, the network may notify the UE of the completion of the initial access procedure through Msg4.

That is, the UE may report the capability of supporting the AI network model through Msg1 or Mgs3.

The UE is capable of reporting the capability of supporting the AI network model in the random access procedure, so that the base station can configure a demodulation reference signal for the UE based on the UE's capability of supporting the AI network model, thereby realizing optimal assignment of resources.

S102 includes: reporting the capability of supporting the AI network model using a time-frequency resource for transmitting a preamble.

As described above, the UE transmits the preamble through the resource configured by the base station for transmitting the preamble, and also reports the capability of supporting the AI network model, so that the base station can learn the UE's capability of supporting the AI network model while receiving the preamble.

Still referring to FIG. 2, after receiving the SIB 1 from the network, the UE learns the resource for transmitting Msg1, and transmits Msg1 along with the capability of supporting the AI network model at a position of the resource for transmitting Msg1.

Further, the above-mentioned step specifically includes: determining subsets of ROs and types of the subsets, wherein the types of the subsets include being used for initiating random access by a UE that supports the AI network model and being used for initiating random access by a UE that does not support the AI network model; and determining a to-be-used subset of the ROs based on the capability of supporting the AI network model and the types of the subsets, and initiating random access using any RO in the to-be-used subset of the ROs.

In some embodiments, the UE can acquire relevant configuration of the ROs through the SIB1 message. The relevant configuration specifically includes a cycle of the ROs, the number of ROs in a time domain in each PRACH cycle, the number of ROs multiplexed in frequency, and the like. RO refers to a time-frequency domain resource used for transmitting a preamble.

In some embodiments, the UE may determine the subsets of ROs and the types of the subsets through the SIB1 message. The subsets of the ROs and the types may be pre-configured by the base station. Different subsets of ROs occupy different frequency and/or time domain resources.

In some embodiments, the UE may receive the subset of ROs and the types of the subsets configured by the base station. The base station may carry the configured subsets of ROs and types in SIB1.

The UE can indirectly indicate its capability of supporting the AI network model via the type of the subset of ROs used for initiating random access, without occupying additional resources or signaling to report the capability, thereby saving resources and signaling overhead.

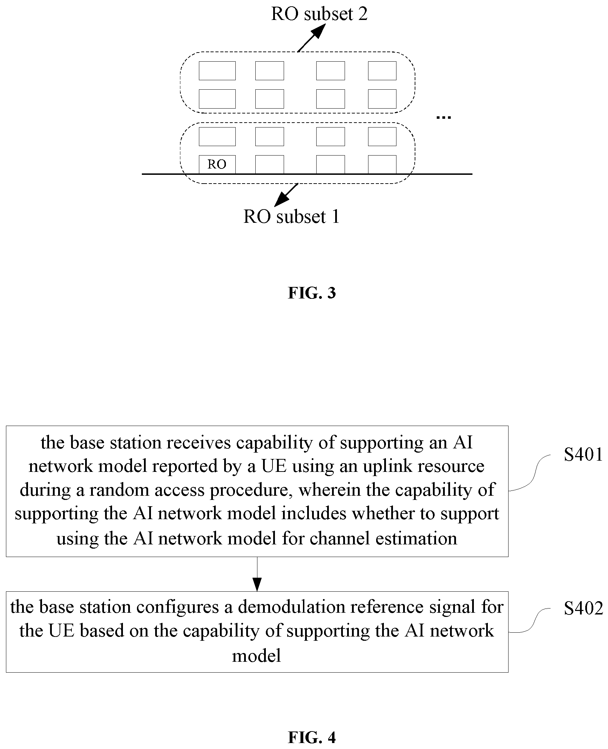

Referring to FIG. 3, the network evenly divides the ROs into two subsets (i.e., RO subset 1 and RO subset 2) in frequency. The RO subset 2 is configured to be used for UEs that support AI channel estimation to initiate random access, and the RO subset 1 is configured for UEs that do not support AI channel estimation to initiate random access. If the UE selects an RO in the RO subset 2 to initiate random access, that is, selects the RO in the RO subset 2 to transmit Msg1, the network considers that the UE supports AI channel estimation. Otherwise, if the UE selects an RO in the RO subset 1 to initiate random access, the network considers that the UE does not support AI channel estimation.

The UE uses a specific preamble to report the capability of supporting the AI network model.

When transmitting Msg1, the UE selects a preamble from 64 different preambles. The base station divides the preambles into different types of preamble subsets in advance, for example, two types of preamble subsets. One type of preamble subset is used by UEs that support AI estimation, and the other type of preamble subset is used by UEs that do not support AI estimation. In other words, the UE can indirectly inform the base station whether the UE supports the AI network model by using different types of preamble subsets.

It could be understood that the number of preambles in the preamble subset may be set flexibly, which is not limited in the embodiments of the present disclosure.

Further, the preamble subset and its type may be pre-configured by the base station and transmitted to the UE.

In some embodiments, S102 may include: reporting the capability of supporting the AI network model using Msg 3.

Different from the foregoing embodiments, in the embodiments, after receiving Msg2 from the network, the UE learns the resource for transmitting Msg3, and transmits Msg3 along with the capability of supporting the AI network model at a position of the resource for transmitting Msg3.

In the embodiments of the present disclosure, by reusing message 3, the capability of supporting the AI network model can be reported while a random access request is initiated, thereby saving resources and signaling overhead.

In some embodiments, S102 may include: receiving a support capability reporting trigger instruction from a base station, wherein the support capability reporting trigger instruction indicates to report the capability of supporting the AI network model; and reporting the capability of supporting the AI network model using a PDSCH scheduled by a PDCCH in response to the support capability reporting trigger instruction.

Different from the foregoing embodiments in which the UE actively reports its capability of supporting the AI network model, in the following non-claimed embodiments, the base station transmits a support capability reporting trigger instruction to the UE, and in response to the support capability reporting trigger instruction, the UE uses the PDSCH scheduled by the PDCCH to report its capability of supporting the AI network model. That is, the UE reports the capability of supporting the AI network model merely in response to the instruction from the base station.

In some embodiments, the base station instructing the UE to report through the trigger instruction may refer to instructing the UE to report by carrying the trigger instruction in a Media Access Control (MAC) Control Element (CE).

In some embodiments, the above steps may include: detecting a support capability reporting trigger event, wherein the support capability reporting trigger event includes a bandwidth part switching event; and reporting the capability of supporting the AI network model on bandwidth part after switching in response to the support capability reporting trigger event being detected.

Different from the foregoing embodiments in which the UE reports the capability of supporting the AI network model merely in response to the instruction from the base station, in the non-claimed embodiments, the UE reports its capability of supporting the AI network model in response to event triggering. Specifically, the UE detects a BandWidth Part (BWP) switching event. If the support capability reporting trigger event is detected, such as switching from BWP1 to BWP2, the UE uses BWP after switching to report the capability of supporting AI network model. Otherwise, the UE does not report its capability of supporting the AI network model.

In some embodiments, the network instructs the UE to switch the BWP through Downlink Control Information (DCI), that is, the DCI carries a specific bit to instruct the UE to switch the BWP. After receiving the BWP switching instruction, the UE switches the BWP, and reports the capability of supporting the AI network model through the PDSCH resource scheduled by the PDCCH on the new BWP after switching.

By using the triggering instruction to indicate reporting or using event triggering for reporting, the UE does not need to report when it does not have the capability of supporting the AI network model, thereby saving resource overhead.

In some embodiments, after S102, the method may further include: if the capability of supporting the AI network model indicates supporting using the AI network model for channel estimation, triggering reporting an input size of all the AI network model.

In some embodiments, after the UE reports to the base station that it has the capability to support the AI network model, the base station can instruct the UE to report the input size of the AI network model through a trigger instruction, and at the same time assign an uplink resource for the UE to report the input size of the AI network model. The UE can report the input size of all the AI network model on the uplink resource configured by the base station. In other words, the UE may support a plurality of AI network models, and as different AI network models have different input/output sizes, the UE can notify the network of the input/output sizes of all AI network models it supports.

That is, the UE may report the input/output sizes of the AI models to the network through Msg1 or Msg3. The UE may report the input/output size of all the AI network model to the network through the PDSCH scheduled by the PDCCH.

Referring to FIG. 4, FIG. 4 is a flow chart of a method for receiving AI network model support capability according to an embodiment. The method as shown in FIG. 1 may be applied to a network side, such as a base station, and include S401 and S402.

In S401, the base station receives capability of supporting an AI network model reported by a UE using an uplink resource during a random access procedure, wherein the capability of supporting the AI network model includes whether to support using the AI network model for channel estimation.

In S402, the base station configures a demodulation reference signal for the UE based on the capability of supporting the AI network model.

The base station obtains each UE's capability of supporting the AI network model during the random access procedure, so as to configure a Demodulation Reference Signal (DMRS) for the UE according to the corresponding capability.

It could be understood that, in some embodiments, the method may be implemented by software programs running in a processor integrated in a chip or a chip module.

Further, S402 as shown in FIG. 4 may include: configuring the demodulation reference signal with a particular density for the UE, wherein the particular density is determined based on whether the UE supports using the AI network model for channel estimation, and the density of the demodulation reference signal configured in response to the UE supporting using the AI network model for channel estimation is lower than the density of the demodulation reference signal configured in response to the UE not supporting using the AI network model for channel estimation. That is, for the UE supporting using the AI network model for channel estimation, the base station configures a DMRS with a relatively low density for it, and for the UE not supporting using the AI network model for channel estimation, the base station configures a DMRS with a relatively high density for it.

In short, UEs that support AI network models may be configured with lower-density DMRS, thereby saving resource overhead on the network side.

In some embodiments, before S201, the method may further include: transmitting to the UE subsets of ROs and types of the subsets, wherein the types of the subsets include being used for initiating random access by a UE that supports the AI network model and being used for initiating random access by a UE that does not support the AI network model.

In the embodiments, the base station may transmit the subsets of ROs and types of the subsets to the UE in SIB 1, and different types of subsets have different functions. The UE may indirectly indicate to the base station its capability of supporting the AI network model by transmitting preambles using different types of subsets of ROs. Accordingly, the base station can determine the capability of supporting the AI network model for the UE that transmits the preamble based on the type of the subset used by the received preamble.

In some embodiments, before S201, the method may further include: transmitting a support capability reporting trigger instruction to the UE, wherein the support capability reporting trigger instruction indicates the UE to report the capability of supporting the AI network model.

Different from the foregoing embodiments in which the base station determines the capability of supporting the AI network model for the UE that transmits the preamble based on the type of the subset of ROs used by the received preamble, in the embodiments, the UE reports its capability of supporting the AI network model in response to the support capability report triggering instruction, so that the base station can directly obtain the UE's capability of supporting the AI network model. For example, the UE's capability of supporting the AI network model is obtained directly through a bit value in Msg3.

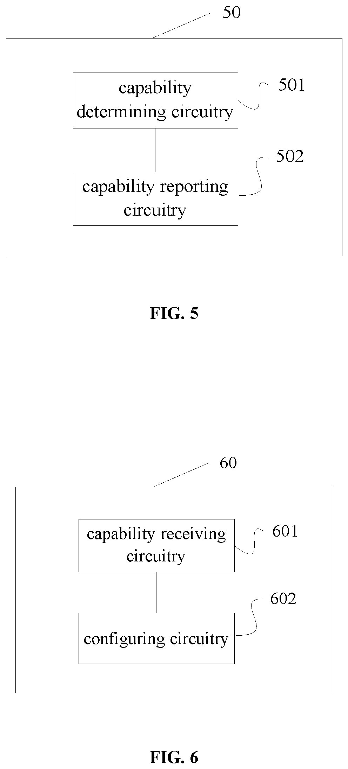

Referring to FIG. 5, FIG. 5 is a structural diagram of an apparatus for reporting AI network model support capability according to an embodiment. The apparatus 50 includes a capability determining circuitry 501 and a capability reporting circuitry 502.

The capability determining circuitry 501 is configured to determine capability of supporting an AI network model, wherein the capability of supporting the AI network model includes whether to support using the AI network model for channel estimation. The capability reporting circuitry 502 is configured to report the capability of supporting the AI network model using an uplink resource in a random access procedure.

Referring to FIG. 6, FIG. 6 is a structural diagram of an apparatus for receiving AI network model support capability according to an embodiment. The apparatus 60 includes a capability receiving circuitry 601 and a configuring circuitry 602.

The capability receiving circuitry 601 is configured to receive capability of supporting an AI network model reported by a UE using an uplink resource during a random access procedure, wherein the capability of supporting the AI network model includes whether to support using the AI network model for channel estimation. The configuring circuitry 602 is configured to configure a demodulation reference signal for the UE based on the capability of supporting the AI network model.

The UE is capable of reporting the capability of supporting the AI network model in the random access procedure, so that the base station can configure a demodulation reference signal for the UE based on the UE's capability of supporting the AI network model, thereby realizing optimal assignment of resources.

Working principles and modes of the apparatus 50 for reporting the AI network model support capability and the apparatus 60 for receiving the AI network model support capability may be referred to the above descriptions of FIGS. 1 to 4, and are not described in detail here.

In some embodiments, each module/unit of each apparatus and product described in the above embodiments may be a software module/unit or a hardware module/unit, or may be a software module/unit in part, and a hardware module/unit in part. For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

A storage medium having computer instructions stored therein is provided, wherein when the computer instructions are executed, the above method as shown in FIG. 1 or FIG. 4 is performed. In some embodiments, the storage medium may be a computer readable storage medium, and may include a non-volatile or a non-transitory memory, or include a ROM, a RAM, a magnetic disk or an optical disk.

In an embodiment of the present disclosure, a UE including a memory and a processor is provided, wherein the memory has computer instructions stored therein, and when the processor executes the computer instructions, the above method as shown in FIG. 1 is performed. The UE may include but is not limited to a terminal device, such as a mobile phone, a computer or a tablet computer.

In an embodiment of the present disclosure, a base station including a memory and a processor is provided, wherein the memory has computer instructions stored therein, and when the processor executes the computer instructions, the above method as shown in FIG. 4 is performed.

Although the present disclosure has been disclosed above with reference to preferred embodiments thereof, it should be understood that the disclosure is presented by way of example only, and not limitation. Those skilled in the art can modify and vary the embodiments without departing from the scope of the present disclosure as defined by the appended claims.

## Claims

1. A method for reporting Artificial Intelligence, AI, network model support capability, comprising:
determining (S101) capability of supporting an AI network model, wherein the capability of supporting the AI network model comprises whether to support using the AI network model for channel estimation; and
reporting (S102) the capability of supporting the AI network model using an uplink resource in a random access procedure; **characterized in that** said reporting (S102) the capability of supporting the AI network model using an uplink resource in a random access procedure comprises:
reporting the capability of supporting the AI network model using a time-frequency resource for transmitting a preamble;
wherein said reporting the capability of supporting the AI network model using the time-frequency resource for transmitting the preamble comprises:
determining subsets of Physical Random Access Channel Occasions, ROs, and types of the subsets, wherein the types of the subsets comprise being used for initiating random access by a User Equipment, UE, that supports the AI network model and being used for initiating random access by a UE that does not support the AI network model; and
determining a to-be-used subset of the ROs based on the capability of supporting the AI network model and the types of the subsets, and initiating random access using any RO in the to-be-used subset of the ROs; or
wherein said reporting the capability of supporting the AI network model using the time-frequency resource for transmitting the preamble comprises:
determining subsets of preambles and types of the subsets, wherein the types of the subsets comprise being used for initiating random access by a UE that supports the AI network model and being used for initiating random access by a UE that does not support the AI network model; and
determining a to-be-used subset of the preambles based on the capability of supporting the AI network model and the types of the subsets, and reporting the capability of supporting the AI network model using a preamble in the to-be-used subset of the preambles.

2. The method according to claim 1, **characterized in that** prior to determining the subsets of ROs and the types of the subsets, the method further comprises:
receiving the subsets of ROs and the types of the subsets which are configured by a base station.

3. The method according to claim 1, **characterized in that** following reporting (S102) the capability of supporting the AI network model using the uplink resource in the random access procedure, the method further comprises:
based on that the capability of supporting the AI network model indicates supporting using the AI network model for channel estimation, receiving an AI model size reporting trigger instruction from a base station, wherein the support capability reporting trigger instruction indicates to report an input size of all the AI network model; and
reporting the input size of all the AI network model using a Physical Downlink Shared Channel, PDSCH, scheduled by a Physical Downlink Control Channel, PDCCH, in response to the AI model size reporting trigger instruction.

4. A storage medium having computer instructions stored therein, **characterized in that** when the computer instructions are executed, the method of any one of claims 1 to 3 is performed.

5. A User Equipment, UE, comprising a memory and a processor, **characterized in that** the memory has computer instructions stored therein, and when the processor executes the computer instructions, the method of any one of claims 1 to 3 is performed.

## Patentansprüche

1. Verfahren zum Berichten einer Unterstützungsfähigkeit eines Netzwerkmodells künstlicher Intelligenz, AI, umfassend:
Bestimmen (S101) einer Fähigkeit zum Unterstützen eines AI-Netzwerkmodells, wobei die Fähigkeit zum Unterstützen des AI-Netzwerkmodells umfasst, ob die Verwendung des AI-Netzwerkmodells zur Kanalschätzung unterstützt werden soll; und
Berichten (S102) der Fähigkeit zum Unterstützen des AI-Netzwerkmodells unter Verwendung einer Uplink-Ressource in einem Random-Access-Verfahren; **dadurch gekennzeichnet, dass** das Berichten (S102) der Fähigkeit zum Unterstützen des AI-Netzwerkmodells unter Verwendung einer Uplink-Ressource in einem Random-Access-Verfahren umfasst:
Berichten der Fähigkeit zum Unterstützen des AI-Netzwerkmodells unter Verwendung einer Zeit-Frequenz-Ressource zum Übertragen einer Präambel;
wobei das Berichten der Fähigkeit zum Unterstützen des AI-Netzwerkmodells unter Verwendung der Zeit-Frequenz-Ressource zum Übertragen der Präambel umfasst:
Bestimmen von Teilsätzen von physikalischen Random-Access-Kanal-Gelegenheiten, ROs, und Typen der Teilsätze, wobei die Typen der Teilsätze umfassen, dass sie zum Einleiten eines Random-Access durch ein Benutzergerät, UE, verwendet werden, das das AI-Netzwerkmodell unterstützt, und dass sie zum Einleiten eines Random-Access durch ein UE verwendet werden, das das AI-Netzwerkmodell nicht unterstützt; und
Bestimmen eines zu verwendenden Teilsatzes der ROs basierend auf der Fähigkeit zum Unterstützen des AI-Netzwerkmodells und den Typen der Teilsätze, und Einleiten eines Random-Access unter Verwendung eines beliebigen RO in dem zu verwendenden Teilsatz der ROs; oder
wobei das Berichten der Fähigkeit zum Unterstützen des AI-Netzwerkmodells unter Verwendung der Zeit-Frequenz-Ressource zum Übertragen der Präambel umfasst:
Bestimmen von Teilsätzen von Präambeln und Typen der Teilsätze, wobei die Typen der Teilsätze umfassen, dass sie zum Einleiten eines Random-Access durch ein UE verwendet werden, das das AI-Netzwerkmodell unterstützt, und dass sie zum Einleiten eines Random-Access durch ein UE verwendet werden, das das AI-Netzwerkmodell nicht unterstützt; und
Bestimmen eines zu verwendenden Teilsatzes der Präambeln basierend auf der Fähigkeit zum Unterstützen des AI-Netzwerkmodells und den Typen der Teilsätze, und Berichten der Fähigkeit zum Unterstützen des AI-Netzwerkmodells unter Verwendung einer Präambel in dem zu verwendenden Teilsatz der Präambeln.

2. Verfahren nach Anspruch 1, **dadurch gekennzeichnet, dass** das Verfahren vor dem Bestimmen der Teilsätze von ROs und der Typen der Teilsätze ferner umfasst:
Empfangen der Teilsätze von ROs und der Typen der Teilsätze, die durch eine Basisstation konfiguriert sind.

3. Verfahren nach Anspruch 1, **dadurch gekennzeichnet, dass** das Verfahren nach dem Berichten (S102) der Fähigkeit zum Unterstützen des AI-Netzwerkmodells unter Verwendung der Uplink-Ressource in dem Random-Access-Verfahren ferner umfasst:
basierend darauf, dass die Fähigkeit zum Unterstützen des AI-Netzwerkmodells die Unterstützung unter Verwendung des AI-Netzwerkmodells zur Kanalschätzung angibt, Empfangen einer AI-Modellgrößenberichtsauslöseanweisung von einer Basisstation, wobei die Unterstützungsfähigkeitsberichtsauslöseanweisung angibt, eine Eingabegröße des gesamten AI-Netzwerkmodells zu berichten; und
Berichten der Eingabegröße des gesamten AI-Netzwerkmodells unter Verwendung eines gemeinsam genutzten physikalischen Downlink-Kanals, PDSCH, der durch einen physikalischen Downlink-Steuerkanal, PDCCH, zugewiesen ist, als Reaktion auf die AI-Modellgrößenberichtsauslöseanweisung.

4. Speichermedium, in dem Computeranweisungen gespeichert sind, **dadurch gekennzeichnet, dass**, wenn die Computeranweisungen ausgeführt werden, das Verfahren nach einem der Ansprüche 1 bis 3 durchgeführt wird.

5. Benutzergerät, UE, umfassend einen Speicher und einen Prozessor, **dadurch gekennzeichnet, dass** der Speicher darin gespeicherte Computeranweisungen aufweist, und wenn der Prozessor die Computeranweisungen ausführt, das Verfahren nach einem der Ansprüche 1 bis 3 durchgeführt wird.

## Revendications

1. Procédé pour rapporter une capacité de prise en charge de modèle de réseau d'intelligence artificielle, AI, comprenant :
la détermination (S101) d'une capacité de prise en charge d'un modèle de réseau AI, dans lequel la capacité de prise en charge du modèle de réseau AI comprend s'il faut prendre en charge l'utilisation du modèle de réseau AI pour une estimation de canal; et
le rapport (S102) de la capacité de prise en charge du modèle de réseau AI en utilisant une ressource de liaison montante dans une procédure d'accès aléatoire; **caractérisé en ce que** ledit rapport (S102) de la capacité de prise en charge du modèle de réseau AI en utilisant une ressource de liaison montante dans une procédure d'accès aléatoire comprend:
le rapport de la capacité de prise en charge du modèle de réseau AI en utilisant une ressource temps-fréquence pour transmettre un préambule;
dans lequel ledit rapport de la capacité de prise en charge du modèle de réseau AI en utilisant la ressource temps-fréquence pour transmettre le préambule comprend:
la détermination de sous-ensembles d'occasions de canal d'accès aléatoire physique, RO, et de types des sous-ensembles, dans lequel les types des sous-ensembles comprennent le fait d'être utilisés pour initier un accès aléatoire par un équipement utilisateur, UE, qui prend en charge le modèle de réseau AI et le fait d'être utilisés pour initier un accès aléatoire par un UE qui ne prend pas en charge le modèle de réseau AI; et
la détermination d'un sous-ensemble à utiliser des RO sur la base de la capacité de prise en charge du modèle de réseau AI et des types des sous-ensembles, et l'initiation d'un accès aléatoire en utilisant n'importe quel RO dans le sous-ensemble à utiliser des RO; ou
dans lequel ledit rapport de la capacité de prise en charge du modèle de réseau AI en utilisant la ressource temps-fréquence pour transmettre le préambule comprend:
la détermination de sous-ensembles de préambules et de types des sous-ensembles, dans lequel les types des sous-ensembles comprennent le fait d'être utilisés pour initier un accès aléatoire par un UE qui prend en charge le modèle de réseau AI et le fait d'être utilisés pour initier un accès aléatoire par un UE qui ne prend pas en charge le modèle de réseau AI; et
la détermination d'un sous-ensemble à utiliser des préambules sur la base de la capacité de prise en charge du modèle de réseau AI et des types des sous-ensembles, et le rapport de la capacité de prise en charge du modèle de réseau AI en utilisant un préambule dans le sous-ensemble à utiliser des préambules.

2. Procédé selon la revendication 1, **caractérisé en ce qu'**avant la détermination des sous-ensembles de RO et des types des sous-ensembles, le procédé comprend en outre:
la réception des sous-ensembles de RO et des types des sous-ensembles qui sont configurés par une station de base.

3. Procédé selon la revendication 1, **caractérisé en ce qu'**après le rapport (S102) de la capacité de prise en charge du modèle de réseau AI en utilisant la ressource de liaison montante dans la procédure d'accès aléatoire, le procédé comprend en outre:
sur la base du fait que la capacité de prise en charge du modèle de réseau AI indique la prise en charge de l'utilisation du modèle de réseau AI pour une estimation de canal, la réception d'une instruction de déclenchement de rapport de taille de modèle AI à partir d'une station de base, dans lequel l'instruction de déclenchement de rapport de capacité de prise en charge indique de rapporter une taille d'entrée de tout le modèle de réseau AI; et
le rapport de la taille d'entrée de tout le modèle de réseau AI en utilisant un canal partagé de liaison descendante physique, PDSCH, planifié par un canal de commande de liaison descendante physique, PDCCH, en réponse à l'instruction de déclenchement de rapport de taille de modèle AI.

4. Support de stockage ayant des instructions informatiques stockées dans celui-ci, **caractérisé en ce que** lorsque les instructions informatiques sont exécutées, le procédé selon l'une quelconque des revendications 1 à 3 est réalisé.

5. Équipement utilisateur, UE, comprenant une mémoire et un processeur, **caractérisé en ce que** la mémoire a des instructions informatiques stockées dans celle-ci, et lorsque le processeur exécute les instructions informatiques, le procédé selon l'une quelconque des revendications 1 à 3 est réalisé.
